# FASCICULE DE BREVET EUROPEEN

(11) **EP 1 754 040 B1**
(45) Date de publication et mention de la délivrance du brevet: **23.04.2008**
(21) Numéro de dépôt: 05749118.5
(22) Date de dépôt: 07.06.2005
(51) Int. Cl.: G01N 1/28, G02B 21/34

(54) **PROCEDE ET DISPOSITIF DE DISPERSION DE POUDRES SECHES**
VERFAHREN UND VORRICHTUNG ZUM DISPERGIEREN VON TROCKENPULVERN
METHOD AND DEVICE FOR DISPERSING DRY POWDERS

(30) Priorité: 08.06.2004 BE 200400282
(43) Date de publication de la demande: 21.02.2007
(73) Titulaire: Occhio, 4031 Liège/Angleur (BE); Logistique Spatiale Wallonne - Wallonia Space Logistics (W.S.L.), 4031 Liège/Angleur (BE)
(72) Inventeur: CHAPEAU, Vincent, B-4100 Seraing (BE); GODINO, Christian, B-4000 Liège (BE)
(74) Mandataire: Claeys, Pierre
(86) Numéro de dépôt international: PCT/EP2005/052612
(87) Numéro de publication internationale: WO 2005/124311

(56) Documents cités:
- WO-A-03/074154
- US-A- 3 472 202
- US-A- 4 868 128
- US-A1- 2002 127 701

## Description

La présente invention se rapporte à un procédé et à un dispositif de dispersion d'un échantillon de poudre sèche dans une chambre de dispersion.

On connaît par exemple, par le brevet US 4 868 128, un procédé de dispersion d'un échantillon de poudre sèche dans une chambre de dispersion comprenant :
- une fermeture étanche de ladite chambre de dispersion,
- un placement de l'échantillon dans des moyens d'introduction de poudre sèche dans la chambre de dispersion,
- une mise sous dépression de la chambre par rapport à un milieu environnant,
- une dispersion de la poudre sèche dans la chambre par une aspiration de celle-ci à l'intérieur,

En outre, le dispositif décrit dans le brevet susmentionné comprend:
- une chambre de dispersion reliée à une source de dépression et située dans un milieu environnant,
- des moyens d'ouverture et/ou de fermeture étanche de ladite chambre de dispersion, et
- des moyens d'introduction de l'échantillon de poudre sèche dans ladite chambre de dispersion,

Malheureusement, ce procédé et ce dispositif provoquent une dispersion ordonnée des grains constituant la poudre sèche à cause de l'existence d'un flux et ceci implique des ségrégations au sein des matériaux granulaires dispersés, empêchant une certaine homogénéité de dispersion des grains sur une surface.

L'invention a pour but de pallier les inconvénients de l'état de la technique en procurant une invention permettant d'éviter cette ségrégation et en permettant une répartition homogène, de préférence, monocouche, des grains dispersés sur la surface.

Pour résoudre ce problème, il est prévu suivant l'invention, un procédé tel qu'indiqué au début comprenant en outre
- une explosion d'une membrane qui se rompt, cette membrane servant de moyens d'introduction susdits et étant intercalée entre ledit milieu environnant et l'intérieur de ladite chambre de dispersion,
- une entrée d'un fluide composant le milieu environnant à travers la membrane rompue, et
- un entraînement par ce fluide de la poudre sèche, placée sur la membrane, à l'intérieur de la chambre de dispersion d'une manière dispersée homogène.

D'autres formes de réalisation du procédé suivant l'invention sont indiquées dans les revendications annexées.

L'invention a aussi pour objet un dispositif tel qu'indiqué au début pour la mise en oeuvre du procédé décrit ci-dessus. Ce dispositif est caractérisé en ce que les moyens d'introduction comprennent une membrane qui est intercalée entre ledit milieu environnant et l'intérieur de ladite chambre de dispersion et sur laquelle est disposé l'échantillon, ladite membrane étant agencée pour se rompre à une différence de pression prédéterminée entre ledit milieu environnant et ledit intérieur de la chambre de dispersion.

D'autres formes de réalisation du dispositif suivant l'invention sont indiquées dans les revendications annexées.

D'autres caractéristiques, détails et avantages de l'invention ressortiront de la description donnée ci-après, à titre non limitatif et en faisant référence au dessin annexé.

La figure 1 est une vue schématique d'une forme de réalisation particulière du dispositif selon l'invention.

La figure 2 est une vue schématique d'une variante de réalisation du dispositif suivant l'invention.

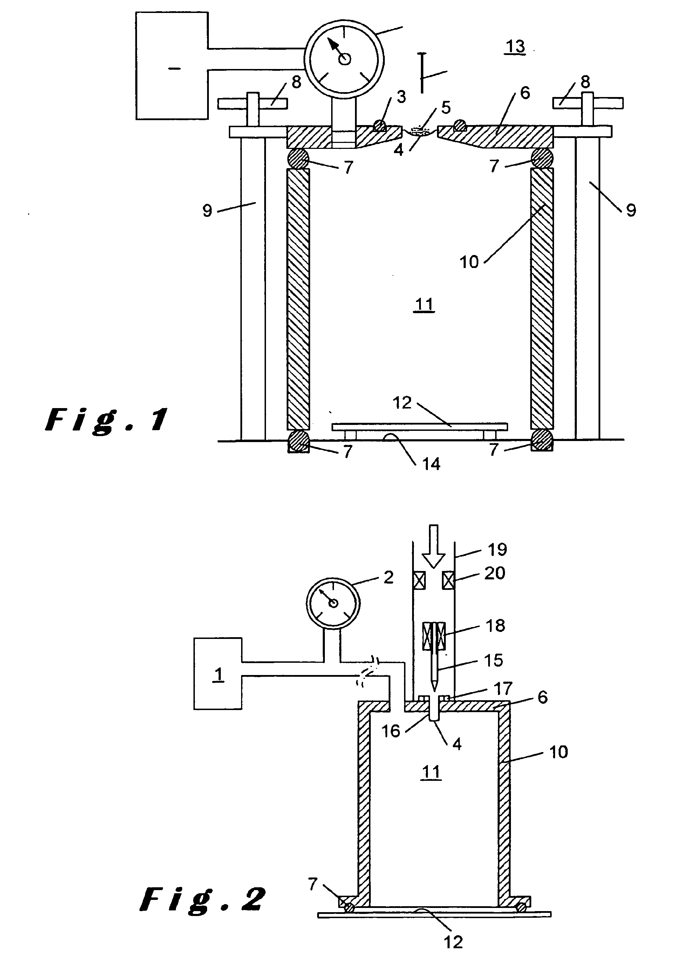

La figure 1 illustre une forme de réalisation particulière du dispositif comprenant une pompe à vide 1, un manomètre 2, des moyens d'introduction d'échantillon dans la chambre de dispersion 11, sous la forme d'une membrane de support de l'échantillon 4, sur laquelle il est prévu de disposer un échantillon de poudre sèche 5, et une surface (surface à traiter 12) sur laquelle l'échantillon de poudre sèche est à disperser. La chambre de dispersion 11 est constituée d'un cylindre 10, d'un couvercle supérieur 6 et d'un fond 14. Ces éléments 10, 6, et 14 peuvent être assemblés pour former la chambre de dispersion. Sur le fond 14, on place un joint d'étanchéité 7 sur lequel le cylindre 10 doit être placé pour l'assemblage. Au dessus du cylindre 10, il est prévu de placer un autre joint d'étanchéité 7 avant de refermer la chambre de dispersion à l'aide du couvercle 6. En outre, des moyens de serrage, par exemple de type à colonne de fermeture 9 et papillons 8 permettent d'assurer l'étanchéité en poussant le couvercle 6 et le fond 14 sur les joints d'étanchéité de part et d'autre du cylindre 11. Les moyens de serrage 8 et 9 et d'étanchéité 7 forment donc les moyens d'ouverture et/ou de fermeture étanche du dispositif selon l'invention. En outre, lors de la réalisation du vide partiel, le couvercle 6 et le fond 14 exercent une pression encore plus importante sur les joints d'étanchéité. Le couvercle 6 et le fond 14 enserrent donc de manière étanche le cylindre 10.

Le dispositif qui est décrit ci dessus est un appareillage de dispersion d'un échantillon de poudre sèche 5 par explosion dans une chambre de dispersion 11 sous vide. Cette technique permet la dispersion des grains de poudres sèches 5 micrométriques ou nanométriques sur une surface positionnée dans le fond de la chambre de dispersion 11, la surface à traiter 12.

Cette dispersion est réalisée en séparant et en mettant en mouvement l'échantillon de poudre sèche 5 sans réaliser de mouvement ordonné des grains constitutifs de la poudre sèche 5, dans la chambre de dispersion 11. Cette condition de ne pas générer de mouvement ordonné de la matière (un flux) est essentielle dans la mesure où un flux génère des ségrégations au sein des matériaux granulaires dispersés, ce qui est très pénalisant dans le cadre des analyses ultérieures.

Pour réaliser l'opération de dispersion, une explosion de faible intensité est générée. Cette explosion est produite par la rupture de la membrane porte-échantillon 4, la membrane 4 étant intercalée entre un milieu environnant 13 et la chambre de dispersion 11 dans laquelle un vide au moins partiel a été préalablement établi.

La mise en mouvement non ordonné de l'échantillon de poudre sèche 5 se fait par un remplissage turbulent de la chambre de dispersion 11 par l'air ambiant 13 ou par n'importe quel gaz. Ce gaz ou l'air ambiant 13 est alors utilisé comme vecteur de la matière au sein de la chambre de dispersion 11.

Cette explosion et le remplissage, par de l'air ambiant 13 ou par n'importe quel gaz, de la chambre de dispersion 11 engendre un phénomène inattendu. Les grains constitutifs de l'échantillon de poudre sèche 5 ont tendance à se repousser les uns les autres et à former un nuage homogène de matière au sein de la chambre de dispersion 11.

L'échantillon de poudre sèche 5 est récupéré à des fins d'analyse par un processus de sédimentation naturelle des grains dans la chambre de dispersion 11 sur la surface à traiter 12.

En outre, lors du rétablissement de la pression environnante dans la chambre de dispersion due à la rupture de la membrane 4, les papillons empêchent un soulèvement du cylindre 10 et maintiennent l'étanchéité pour éviter une perte d'échantillon 4.

Pour mettre en oeuvre le dispositif illustré sur la figure 1, on peut procéder de la manière suivante. On dispose la surface à traiter 12 sur la base inférieure de la chambre de dispersion 11, on procède à la fermeture de la chambre de dispersion 11, en déposant le cylindre 10 sur le joint d'étanchéité inférieur 7. Le couvercle supérieur 6 pivote sur la colonne de fermeture de droite 9 et il va se placer dans la position de compression. Les joints supérieurs et inférieurs 7 sont comprimés par des vis à papillon (8) boulonnées sur les deux colonnes latérales 9.

Quand la procédure de préparation de la chambre de dispersion 11 est terminée, on dépose le porte-échantillon à membrane 3 dans l'ouverture prévue à cet effet sur le couvercle supérieur 6, et on fixe le porte-échantillon à membrane 3 en appuyant sur la bague de fixation du porte-échantillon à membrane 3.

On dispose l'échantillon de poudre sèche 5 sur la membrane 4 de support de l'échantillon qui a été préalablement fixée au porte-échantillon à membrane 3.
On réalise le vide dans la chambre de dispersion 11 en actionnant la pompe à vide 1 qui aspire l'air, la membrane 4 de support de l'échantillon va alors se tendre ; le manomètre 2 permet de suivre l'évolution de la pression interne dans la chambre de dispersion 11. Quand la pression atteint le niveau souhaité dans la chambre de dispersion 11, deux cas peuvent être envisagés :

Premièrement, la membrane 4 de support de l'échantillon est intacte et l'explosion est réalisée à l'aide d'un poinçon 15 qui perfore la membrane 4 de support de l'échantillon, manuellement ou automatiquement, en initiant ainsi l'explosion.

Deuxièmement, la membrane 4 de support de l'échantillon peut être dimensionnée pour se rompre automatiquement quand la tension créée par la différence de pression existant entre ses deux faces dépasse un seuil de résistance donné de la membrane. Ceci permet d'automatiser la procédure d'explosion de la membrane 4 de support de l'échantillon.

La rupture de la membrane 4 de support de l'échantillon engendre une ouverture dans la chambre de dispersion 11 ce qui entraîne une pénétration d'air ambiant 13 ou d' un gaz ou d'un fluide quelconque aspiré par le vide régnant auparavant à l'intérieur de la chambre de dispersion.

La pénétration du fluide dans la chambre de dispersion 11 est accompagnée d'une aspiration complète de l'échantillon de poudre sèche 5 à l'intérieur de la chambre de dispersion 11. Des turbulences inhérentes au processus de remplissage dans la chambre de dispersion 11 dispersent les grains constitutifs de l'échantillon de poudre sèche5.

Après un temps suffisant pour permettre la sédimentation naturelle de l'échantillon de poudre sèche 5 dans la chambre de dispersion 11, on extrait la surface traitée 12, sur laquelle une monocouche uniforme de matière s'est déposée avec une répartition tout à fait aléatoire des particules.

Le dispositif suivant la figure 2 se différencie de celui de la figure 1 par une simplification de la construction de la chambre de dispersion 11 où le cylindre 10 et le couvercle 6 sont réalisés d'une pièce. Le dispositif comprend en outre une capsule tubulaire 16 amovible. Celle-ci peut être introduite dans l'orifice supérieur de la chambre de dispersion 11, d'une manière étanche grâce à son rebord en forme de collerette 17 munie d'un joint d'étanchéité. La capsule est, à son extrémité supérieure, ouverte vers le milieu environnant. Son extrémité inférieure est pourvue de la membrane 4 qui supporte l'échantillon à disperser. Cette extrémité inférieure fait saillie à l'intérieur de la chambre.

Cet agencement permet un placement aisé de l'échantillon dans la capsule alors que celle-ci n'est pas encore sur le dispositif. La capsule est aisément manipulable et remplaçable par une autre après dispersion de l'échantillon qu'elle contient. De plus, quand la membrane se rompt la dispersion a lieu à distance du couvercle 6 ce qui favorise une dispersion totale de la poudre.

Dans l'exemple de réalisation suivant la figure 2, on a représenté un poinçon 15 entraîné en mouvement suivant un déplacement linéaire vers et à l'écart de la membrane, et cela de manière motorisée. Dans le cas présent le poinçon est une tige de solénoïde entraînée par un électroaimant 18.

Dans l'exemple illustré sur la figure 2, un tube d'amenée 19 est prévu pour le fluide environnant autour de l'orifice où est logée la capsule 16. Ce tube est, à son extrémité supérieur, ouvert vers l'extérieur. Il contient en outre, dans sa cavité tubulaire, des moyens d'ionisation de gaz 20 connus en soi et représentés de manière schématique, par exemple une bobine électromagnétique. Lorsque la membrane 4 se rompt, il y a un appel de gaz depuis l'extérieur, à travers le tube d'emmenée 19. Ce gaz est alors ionisé en passant devant les moyens d'ionisation 20. Cette ionisation a pour effet de favoriser encore davantage la répulsion des particules de poudre entre elles et donc d'obtenir une encore meilleure dispersion aléatoire de la poudre sur la surface à traiter 12.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de dispersion d'un échantillon de poudre sèche (5) dans une chambre de dispersion (11) comprenant :
- une fermeture étanche de ladite chambre de dispersion (11),
- un placement de l'échantillon (5) dans des moyens d'introduction de poudre sèche (4) dans la chambre de dispersion (11),
- une mise sous dépression de la chambre (11) par rapport à un milieu environnant (13),
- une dispersion de la poudre sèche (5) dans la chambre (11) par une aspiration de celle-ci à l'intérieur,
**caractérisé en ce qu'**il comprend en outre:
- une explosion d'une membrane (4) qui se rompt, cette membrane (4) servant de moyens d'introduction susdits et étant intercalée entre ledit milieu environnant (13) et l'intérieur de ladite chambre de dispersion (11),
- une entrée d'un fluide composant le milieu environnant (13) à travers la membrane (4) rompue, et
- un entraînement par ce fluide de la poudre sèche (5), placée sur la membrane (4), à l'intérieur de la chambre de dispersion d'une manière dispersée homogène.

2. Procédé selon la revendication 1, **caractérisé en ce que** la mise sous dépression comprend une augmentation graduelle de différence de pression entre l'intérieur de ladite chambre de dispersion (11) et le milieu environnant (13) mise sous tension de ladite membrane (4) et **en ce que** l'explosion est provoquée par une rupture de la membrane due au dépassement d'un seuil de résistance de celle-ci.

3. Procédé selon l'une des revendications 1 et 2, **caractérisé en ce que** l'explosion est initiée par une perforation de la membrane (4).

4. Procédé selon l'une des revendications 1 à 3, **caractérisé en ce qu'** il comprend en outre une ionisation dudit fluide composant le milieu environnant.

5. Dispositif de dispersion d'un échantillon de poudre sèche (5) dans une chambre de dispersion (11) comprenant :
- une chambre de dispersion (11) reliée à une source de dépression (1) et située dans un milieu environnant (13),
- des moyens d'ouverture et/ou de fermeture étanche (7, 8, 9, 10) de ladite chambre de dispersion (11), et
- des moyens d'introduction de l'échantillon (4) de poudre sèche (5) dans ladite chambre de dispersion (11),
**caractérisé en ce que** les moyens d'introduction (4) comprennent une membrane (4) qui est intercalée entre ledit milieu environnant (13) et l'intérieur de ladite chambre de dispersion (11) et sur laquelle est disposé l'échantillon, ladite membrane (4) étant agencée pour se rompre à une différence de pression prédéterminée entre ledit milieu environnant (13) et ledit intérieur de la chambre de dispersion (11).

6. Dispositif de dispersion selon la revendication 5, **caractérisé en ce que** ladite membrane (4) est dimensionnée pour se rompre automatiquement au-delà d'une valeur prédéterminée de ladite différence de pression.

7. Dispositif de dispersion selon la revendication 5, **caractérisé en ce qu'**il comprend un moyen de poinçon capable de rompre ladite membrane (4) à une valeur prédéterminée de différence de pression.

8. Dispositif de dispersion suivant l'une des revendications 5 à 7, **caractérisé en ce qu'**il comprend une capsule tubulaire amovible, agencée de manière étanche au travers d'un orifice de la chambre de dispersion, de manière à faire saillie à l'intérieur de celle-ci, cette capsule présentant à une première extrémité, une ouverture vers le milieu environnant et, à une deuxième extrémité opposée à la première et située à l'intérieur de la chambre de dispersion, ladite membrane, l'échantillon supporté par celle-ci étant ainsi contenu dans la capsule amovible.

9. Dispositif de dispersion suivant l'une des revendications 7 et 8 , **caractérisé en ce qu'**il comprend des moyens automatisés de déplacement linéaire du moyen de poinçon vers et à l'écart de la membrane.

10. Dispositif suivant l'une des revendications 5 à 9, **caractérisé en ce qu'**il comprend des moyens d'ionisation d'un fluide composant le milieu environnant qui est situé du côté extérieur de la membrane.

## Claims

1. Method of dispersing a sample of dry powder (5) in a dispersion chamber (11), comprising:
- sealed closure of the said dispersion chamber (11),
- the placing of the sample (5) in means of introducing dry powder (4) into the dispersion chamber (11),
- putting the chamber (11) under negative pressure with respect to a surrounding environment (13),
- dispersion of the dry powder (5) in the chamber (11) by suction thereof inside,
**characterised in that** it also comprises:
- explosion of a membrane (4) that ruptures, this membrane (4) serving as the above mentioned introduction means and being interposed between the said surrounding environment (13) and the interior of the said dispersion chamber (11),
- entry of a fluid composing the surrounding environment (13) through the ruptured membrane (4), and
- entrainment by this fluid of the dry powder (5) placed on the membrane (4), inside the dispersion chamber in an evenly dispersed manner.

2. Method according to claim 1, **characterised in that** the putting under negative pressure comprises a gradual increase in pressure difference between the inside of the said dispersion chamber (11) and the tensioned surrounding environment (13) of the said membrane (4) and **in that** the explosion is caused by a rupture of the membrane due to a strength threshold thereof being exceeded.

3. Method according to one of claims 1 and 2, **characterised in that** the explosion is initiated by a perforation of the membrane (4).

4. Method according to once of claims 1 to 3, **characterised in that** it also comprises an ionisation of the said fluid making up the surrounding environment.

5. Device for dispersing a sample of dry powder (5) in a dispersion chamber (11), comprising:
- a dispersion chamber (11) connected to a negative-pressure source (1) and situated in a surrounding environment (13),
- means (7, 8, 9, 10) of opening and/or sealed closure of the said dispersion chamber (11), and
- means of introducing the sample (4) of dry powder (5), into the said dispersion chamber (11),
**characterised in that** the introduction means (4) comprising a membrane (4) that is interposed between the said surrounding environment (13) and the inside of the said dispersion chamber (11) and on which the sample is disposed, the said membrane (4) being arranged so as to rupture at a predetermined difference in pressure between the said surrounding environment (13) and the said inside of the dispersion chamber (11).

6. Dispersion device according to claim 5, **characterised in that** the said membrane (4) is sized so as to rupture automatically beyond a predetermined value of the said pressure difference.

7. Dispersion device according to claim 5, **characterised in that** it comprises a punch means capable of rupturing the said membrane (4) at a predetermined pressure difference value.

8. Dispersion device according to one of claims 5 to 7, **characterised in that** it comprises a removable tubular capsule, arranged sealingly through an orifice in the dispersion chamber, so as to project inside it, this capsule having a first end, an opening towards the surrounding environment and, at a second end opposite the first and situated inside the dispersion chamber, the said membrane, the sample supported by the latter thus being contained in the removal capsule.

9. Dispersion device according to one of claims 7 and 8, **characterised in that** it comprises automated means of linear movement of the punch means towards and away from the membrane.

10. Device according to one of claims 5 to 9, **characterised in that** it comprises means of ionising a fluid making up the surrounding environment that is situated on the outside of the membrane.

## Patentansprüche

1. Verfahren zum Dispergieren einer Trockenpulverprobe (5) in einer Dispergierkammer (11), umfassend:
- einen dichten Verschluss der Dispergierkammer (11),
- eine Anordnung der Probe (5) in Mitteln zur Einführung von Trockenpulver (4) in die Dispergierkammer (11),
- ein Versetzen der Kammer (11) in Unterdruck im Verhältnis zu einem umgebenden Medium (13),
- ein Dispergieren des Trockenpulvers (5) in der Kammer (11) durch ein Ansaugen desselben in das Innere,
**dadurch gekennzeichnet, dass** es ferner umfasst:
- eine Explosion einer Membran (4), die bricht, wobei diese Membran (4) als oben erwähntes Einführungsmittel dient und zwischen dem umgebenden Medium (13) und dem Inneren der Dispergierkammer (11) angeordnet ist,
- einen Eintritt eines das umgebende Medium (13) bildenden Fluids durch die gebrochene Membran (4), und
- ein Mitnehmen des Trockenpulvers (5), das auf der Membran (4) angeordnet ist, durch dieses Fluid in das Innere der Dispergierkammer auf homogen dispergierte Weise.

2. Verfahren nach Anspruch 1, **dadurch gekennzeichnet, dass** das Versetzen unter Unterdruck eine stufenweise Erhöhung des Druckunterschieds zwischen dem Inneren der Dispergierkammer (11) und dem umgebenden Medium (13), Spannungserhöhung der Membran (4) umfasst, und dass die Explosion durch einen Bruch der Membran auf Grund des Überschreitens einer Widerstandsgrenze derselben hervorgerufen wird.

3. Verfahren nach einem der Ansprüche 1 und 2, **dadurch gekennzeichnet, dass** die Explosion durch eine Perforation der Membran (4) eingeleitet wird.

4. Verfahren nach einem der Ansprüche 1 bis 3, **dadurch gekennzeichnet, dass** es ferner eine Ionisierung des Fluids, das das umgebende Medium bildet, umfasst.

5. Vorrichtung zum Dispergieren einer Trockenpulverprobe (5) in einer Dispergierkammer (11), umfassend:
- eine Dispergierkammer (11), die mit einer Unterdruckquelle (1) verbunden ist und sich in einem umgebenden Medium (13) befindet,
- Mittel zum dichten Öffnen und/oder Schließen (7, 8, 9, 10) der Dispergierkammer (11), und
- Mittel zum Einführen einer Probe (4) aus Trockenpulver (5) in die Dispergierkammer (11),
**dadurch gekennzeichnet, dass** die Einführungsmittel (4) eine Membran (4) umfassen, die zwischen dem umgebenden Medium (13) und dem Inneren der Dispergierkammer (11) angeordnet ist und auf der die Probe liegt, wobei die Membran (4) derart angeordnet ist, dass sie bei einem vorbestimmten Druckunterschied zwischen dem umgebenden Medium (13) und dem Inneren der Dispergierkammer (11) bricht.

6. Dispergiervorrichtung nach Anspruch 5, **dadurch gekennzeichnet, dass** die Membran (4) derart dimensioniert ist, dass sie automatisch über einen vorbestimmten Wert des Druckunterschieds hinaus bricht.

7. Dispergiervorrichtung nach Anspruch 5, **dadurch gekennzeichnet, dass** sie ein Durchschlagmittel umfasst, das die Membran (4) bei einem vorbestimmten Wert des Druckunterschieds brechen kann.

8. Dispergiervorrichtung nach einem der Ansprüche 5 bis 7, **dadurch gekennzeichnet, dass** sie eine abnehmbare röhrenförmige Kapsel umfasst, die dicht durch eine Öffnung der Dispergierkammer angeordnet ist, um in das Innere derselben zu ragen, wobei diese Kapsel an einem ersten Ende eine Öffnung zum umgebenden Medium und an einem zweiten Ende, das dem ersten gegenüber liegt und sich im Inneren der Dispergierkammer befindet, die Membran aufweist, wobei die von dieser getragene Probe somit in der abnehmbaren Kapsel enthalten ist.

9. Dispergiervorrichtung nach einem der Ansprüche 7 und 8, **dadurch gekennzeichnet, dass** sie automatische Mittel zur Linearverschiebung des Durchschlagmittels zu und von der Membran umfasst.

10. Vorrichtung nach einem der Ansprüche 5 bis 9, **dadurch gekennzeichnet, dass** sie Mittel zum Ionisieren eines Fluids, das das umgebende Medium bildet, das sich außerhalb der Membran befindet, umfasst.
